**Europäisches Patentamt**

**European Patent Office**

**Office européen des brevets**

(19)

(11) Veröffentlichungsnummer: **0 003 100**
**B1**

(12) **EUROPÄISCHE PATENTSCHRIFT**

(45) Veröffentlichungstag der Patentschrift: **26.08.81**

(21) Anmeldenummer: **79100006.0**

(22) Anmeldetag: **02.01.79**

(51) Int. Cl.³: **H 01 F 1/11, C 01 G 49/02,
G 11 B 5/70**

(54) Ferrimagnetisches Eisenoxid und Verfahren zu dessen Herstellung.

(30) Priorität: **13.01.78 DE 2801395**

(43) Veröffentlichungstag der Anmeldung:
**25.07.79 Patentblatt 79/15**

(45) Bekanntmachung des Hinweises auf die Patenterteilung:
**26.08.81 Patentblatt 81/34**

(84) Benannte Vertragsstaaten:
**BE DE FR GB IT NL**

(56) Entgegenhaltungen:
**DE - A - 2 347 486
DE - A - 2 507 420
DE - A - 2 520 379
FR - A - 2 130 407**

(73) Patentinhaber: **BAYER AG
Zentralbereich Patente, Marken und Lizenzen
D-5090 Leverkusen 1, Bayerwerk (DE)**

(72) Erfinder: **Buxbaum, Gunter, Dr.
Holzapfelweg 2
D-4150 Krefeld 1 (DE)**
Erfinder: **Hahnkamm, Volker, Dr.
Doerperhofstrasse 14
D-4150 Krefeld 1 (DE)**
Erfinder: **Printzen, Helmut, Dr.
Heckchenstrasse 93
D-4150 Krefeld 1 (DE)**

Courier Press, Leamington Spa, England.

EP 0 003 100 B1

# 0 003 100

## Ferrimagnetisches Eisenoxid und Verfahren zu dessen Herstellung

Die vorliegende Erfindung betrifft ein hochkoerzitives ferrimagnetisches Eisenoxid, das Verfahren zu dessen Herstellung und die Verwendung in magnetischen Aufzeichnungsträgern.

Die Entwicklung magnetischer Materialien zur Signalaufzeichnung, speziell zur Audio- und Videoaufzeichnung, geht in die Richtung höher koerzitiver Materialien, damit, höhere Speicherdichten und eine verbesserte Wiedergabe im Bereich kurzer Wellenlängen erreicht wird. Um dieses Ziel zu erreichen, sind viele Wege vorgeschlagen worden.

Es wird zum Beispiel $CrO_2$ eingesetzt. Aufgrund der chemischen Instabilität und anderer bekannter Nachteile ist der Anwendungsbereich jedoch eingeschränkt.

Weiterhin wird magnetisches Eisenoxid mit Kobalt dotiert, um die Koerzitivfeldstärke zu erhöhen. Durch die mit der Kobaltdotierung bewirkte hohe Magnetostriktion wird die thermische und mechanische Stabilität der magnetischen Eigenschaften jedoch negativ beeinflußt.

Koerzitivfeldstärken bis

$$3.88 \cdot 10^4 \ \frac{A}{m}$$

sind auch schon an reinen Eisenoxiden gemäß der britischen Patentschrift 1 385 777 gemessen worden, jedoch ist das Rauschen von mit derartigem Material hergestellten Tonbändern für moderne Anwendungen, z.B. für Cassetten-Systeme nicht befriedigend. Speziell die Tonbänder für Cassetten-Systeme erfordern ein gutes Rauschniveau.

Es ist also wünschenswert, magnetische Aufzeichnungsmaterialien bereitzustellen, die neben hohen Koerzitivkräften, und damit guten Wiedergabeeigenschaften im Bereich hoher Frequenzen, ein niedriges Rauschniveau aufweisen. Die durch die Bandherstellung über die Oberflächenglätte beeinflußbare Wiedergabe de hohen Frequenzen steht jedoch in reziproker Abhängigkeit vom Rauschniveau. Wenn bei gegebenem Bandmaterial das Rauschniveau verringert wird, verschlechtert sich die Wiedergabe bei hohen Frequenzen und umgekehrt, wenn durch bessere Bandglätte die Wiedergabe bei hohen Frequenzen verbessert wird, führt dies zu einem Anstieg des Raushniveaus.

Will man nun die Dynamik bei hohen Frequenzen wirkungsvoll verbessern, so muß man den Anteil des Rauschens, das vom Pigment verursacht wird, verringern. Die verbesserten Pigmenteigenschaften lassen sich dann als Summe der Verbesserungen im Rauschniveau und der Wiedergabe bei hohen Frequenzen angeben.

Als Maß für die Wiedergabe der hohen Frequenzen dient die maximale Wiedergabespannung bei einer Frequenz von 10 k Hz (Aussteuerbarkeit), die kurz als $U_{10 \ k,max}$ bezeichnet wird.

Als Meßwert für das Rauschen wird das Ruherauschen (RG) nach DIN 45405 angegeben.

Zur Eliminierung von Parametern und Konstanten der Meßgeräte werden beide Meßwerte nicht direkt miteinander verglichen, sondern mit einem Bezugsband nach DIN 45513, zur Zeit Teil 6/1976. Dabei werden die Meßwerte auf die entsprechenden Meßwerte des DIN-Bezugsbandes bezogen und in dB angegeben. Die Gesamtverbesserung der Höhendynamik, d.h. das Verhältnis der maximalen Wiedergabespannung bei 10 k Hz zum Ruherauschen nach DIN 45405 ergibt sich als Summe der Verbesserungen des Ruherauschens gegenüber dem Bezugsband und der Verbesserung der Aussteuerbarkeit gegenüber dem Bezugsband.

Gegenstand der vorliegenden Erfindung sind thermisch stabilisierte ferrimagnetische Eisenoxide einer mittleren Kristallitgröße von 20—35 nm mit Koerzitivfeldstärken von

$$2.78—3.98 \cdot 10^4 \ \frac{A}{m},$$

die nach Einarbeitung in ein Magnetband ein gegenüber dem Bezugsband gemäß DIN 45513, Teil 6/1976 ein um mindestens 6 dB verbessertes Verhältnis der Aussteuerbarkeit bei einer Frequenz von 10 k Hz zum Ruherauschen nach DIN 45 405 aufweisen.

Die erfindungsgemäßen ferrimagnetischen Eisenoxide können eines oder mehrere der Elemente Cd, Pb, Ca, Mg, Zn, Al, Cr, W, P (gerechnet als $P_2O_5$) und/oder B (gerechnet als $B_2O_5$) in Mengen von 0,1 bis 5 Gew.-% enthalten.

Vorzugsweise sind die neuen ferrimagnetischen Eisenoxide vom Magnetit-Typ mit Zink und Phosphor stabilisiert, wobei Gehalte von 0,3 bis Gew.-% Zink und 0,3 bis 3 Gew.-% Phosphor, berechnet als $P_2O_5$, bezogen auf $Fe_3O_4$ besonders gute magnetische Eigenschaften ergeben. Die neuen Magnetite eignen sich für alle magnetischen Aufzeichnungsträger, da sie insbesondere bei Kobaltfreiheit eine gute Wiedergabe hoher Frequenzen ermöglichen ohne thermische und mechanische Instabilität. In Kombination mit anderen magnetischen Eisenoxiden eignen sich die neuen Magnetite besonders zur Herstellung von Mehrschichtbänden, die mit Rekodern üblicher HF-Vormagnetisierung hervorragende

2

Audio-Aufzeichnungseigenschaften besitzen und $CrO_2$-Bändern insoweit überlegen sind.

Daneben weisen die neuen Magnetite gegenüber herkömmlichen magnetischen Eisenoxiden ein um 2—6 dB verbessertes Ruherauschen auf.

Gegenstand der vorliegenden Erfindung ist auch das Verfahren zur Herstellung dieser neuen Eisenoxide vom Magnetittyp. Das Verfahren ist dadurch gekennzeichnet, daß ein thermisch stabilisiertes $\alpha$-FeOOH mit einem Länge: Breite Verhältnis von 1:10 bis 1:30 mit einer Teilchengröße, die üblicherweise als Keim zur $\alpha$-FeOOH-Pigmentherstellung benutzt wird (12 bis 22 nm) bei pH-Werten kleiner als 7 aus Fe(II)-Salzlösungen gefällt, vor der Entwässerung gegen Versinterung geschützt, entwässert, getempert und zum $Fe_3O_4$ reduziert wird.

Die thermische Stabilisierung des $\alpha$-FeOOH wird vorzugsweise durch Dotierung des $\alpha$-FeOOH, besonders bevorzugt während der Herstellung mit anorganischen Kat- und/oder Anionen durchgeführt. Hierfür eignen sich neben den Elementen Cd, Pb, Ca, Mg, Al, Cr, W und B insbesondere P und Zn. Eine besonders gute Stabilisierung wird mit einer Kombination von P und Zn erreicht, wobei Mengen von 0,3—3 Gew.-% P. gerechnet als $P_2O_5$, bezogen auf $Fe_2O_4$ und 0,3 bis 3 Gew.-% Zn, bezogen auf $Fe_3O_4$, ausreichend sind.

Die Zugabe der Stabilisatoren erfolgt vor oder während der Ausfällung des $\alpha$-FeOOH in den zur Dotierung notwendigen Mengen in Form ihrer wasserlöslichen Salze.

Es ist jedoch auch möglich, die Dotierung durch Auffällung und gegebenenfalls Temperung auf das gefällte und oxidierte bzw. wieder reduzierte FeOOH bzw. $Fe_3O_4$ zu bewirken.

Vorzugsweise wird die Dotierung mit einem Schutz des $\alpha$-FeOOH gegen eine Versinterung der Einzelkristalle während der Umwandlung in magnetisches Oxid kombiniert. Hierfür wird vor der Entwässerung direkt in der von ihrer Herstellung stammenden $\alpha$-FeOOH-Suspension ein Überzug aus Hydroxiden des Chroms oder Aluminiums bzw. aus Phosphaten und/oder Boraten und/oder Wolframaten oder auch eine Kombination aus den genannten Ionen aufgefällt. Die Herstellung dieser schützenden Überzüge erfolgt in an sich bekannter Weise, z.B. nach dem Verfahren der belgischen Patentschrift 828 540.

Die Nachbehandlung durch Umhüllung der Teilchen führt nicht nur zu einem Schutz vor Versinterung, sondern während der nachfolgenden thermischen Vorgänge auch zu einer zusätzlichen Dotierung.

Die zur Stabilisierung eingesetzten Metallionen werden der Fe(II)-Salzlösung in Form von wasserlöslichen Salzen zugegeben, vorzugweise als Sulfate und/oder Chloride.

Besonders gute Ergebnisse werden durch Auffällung von Phosphaten, bevorzugt Eisenphosphaten, erzielt. Es werden Mengen, die zu einem Gesamtgehalt des FeOOH an P, gerechnet als $P_2O_5$ von 0,3 bis 3 Gew.-%, bezogen auf $Fe_3O_4$, führen, eingesetzt, wobei vorzugsweise ein Teil des Phosphors während der Herstellung des $\alpha$-FeOOH eingebracht wird. Eine weitere Verbesserung der Eigenschaften läßt sich ggf. erreichen, wenn diese Phosphordotierung während der Herstellung des $\alpha$-FeOOH bei gleichzeitiger Anwesenheit von Zinksalzen erfolgt.

Die Herstellung des $\alpha$-FeOOH durch Fällung aus sauren Fe(II)-Salzlösungen mit anschließender Oxidation durch Einblasen sauerstoffhaltiger Gase in die Fällungssuspension erfolgt ebenso wie die anschließende Trocknung, Entwässerung und Reduktion zum $Fe_3O_4$ in an sich bekannter Weise, z.B. nach der DE—PS 23 47 486 mit dem Unterschied, daß das Verfahren nach der Keimherstellung bei Erreichen einer Teilchengröße von 12—22 nm abgebrochen wird.

Die Fällung und Oxidation des basischen Fe(II)-Salzes erfolgt bevorzugt aus $FeSO_4$-haltiger Lösung bei pH-Werten kleiner als 7. Die Oxidation wird bei Erreichen eines pH-Wertes kleiner als 4 abgebrochen und der oben beschriebenen Behandlung gegen Versinterungen unterworfen.

Als Alkalien können Carbonate oder Hydroxide eingesetzt werden. Vorzugsweise wird NaOH eingesetzt.

Bei Verwendung von Phosphor als Stabilisator wird dieses vorzugsweise durch Auflösen von $NaH_2PO_4 \cdot 2 H_2O$ in einer kleinen Menge des Lösungsmittels gemeinsam mit den Alkalien zu der Eisen- und gegebenenfalls Zinksulfat enthaltenden Lösung hinzugegeben.

Das ausgefällte Eisen(II) wird durch Hindurchleiten von 2 bis 8 Liter Luft pro Stunde und Liter Fällungslösung unter intensivem Rühren oxidiert.

Die Oxidation wird vorzugsweise bei Temperaturen von 40 bis 80°C durchgeführt bis die Suspension eine gelb-braune Farbe angenommen hat. Anstelle von Luft kann auch Sauerstoffangereicherte Luft zur Oxidation eingesetzt werden. Die Auffällung von Eisen-Phosphat auf die Oberfläche der Suspensionsteilchen zum Schutz gegen Versinterung erfolgt durch langsame Zugabe von in etwas destilliertem Wasser aufgelöstem Phosphat, vorzugsweise Pyrophosphat.

Das erhaltene modifizierte alpha-FeOOH wird abfiltriert, sulfatfrei gewaschen, bei Temperaturen wenig oberhalb 100°C getrocknet, bei Temperaturen zwischen 250 und 400°C entwässert und einer Temperung bei Temperaturen zwischen 400 und 900°C unterzogen.

Diese Temperaturbehandlung erstreckt sich vorzugsweise über einen Zeitraum von 0,5 bis 2 Stunden bei Temperaturen von 650 bis 850°C.

Die so erhaltene Vorläuferverbindung wird in üblicher Weise bei 400 bis 500°C in feuchten Wasserstoff, z.B. in einem Wirbelbett, zum $Fe_3O_4$ reduziert.

Gegebenenfalls kann eine weitere Temperung bei 600 bis 800°C unter Stickstoff oder vorzugsweise Kohlendioxid angeschlossen werden, wodurch eine weitere Verbesserung des erfindungsgemäßen Pigmentes erreicht wird. Die anschließende Abkühlung des Pigmentes muß zur Verhinderung einer Reoxydation unter nicht-oxydierenden Bedingungen erfolgen.

Nach dem Abkühlen des Pigmentes wird zweckmäßigerweise eine Behandlung mit Stickstofforganischen Verbindungen zur Verhinderung der Oxidation an Umgebungsluft gemäß der DE—OS 27 44 598 angeschlossen. Als Stickstoff-organische Verbindungen sind insbesondere gegebenenfalls Amin-substituierte Heterozyklen, wobei mindestens eines der Hetercatome ein Stickstoffatom ist, geeignet. Bevorzugt werden Morpholin, 1,2,4-Triazol, 3-Amino-1,2,4-Triazol und/oder N-(2-hydroxyäthyl-)piperazin eingesetzt.

Die vorliegende Erfindung wird durch die folgenden Beispiele näher erläutert. Dabei sind jeweils die magnetischen Pulverwerte und die röntgenographische mittlere Kristallitgröße, die etwa dem Nadeldurchmesser entspricht, angegeben. Die Koerzitivfelstärken wurden jeweils in einem Feld von ca.

$$3{,}2 \times 10^5 \ \frac{A}{m}$$

bestimmt. Die gemäß den Herstellungsbeispielen erhaltenen Magnetpigmente wurden jeweils nach dem unten angegebenen Verfahren zu Magnetbändern verarbeitet.

Die an diesen Magnetbändern gemessenen Werte der Koerzitivfeldstärken, der Verbesserung der Aussteuerbarkeit bei der Frequenz von 10 kHz ($\Delta U_{10 \text{ k, max}}$) und die Verbesserung des Rauschsignals ($\Delta$ RG) jeweils gegenüber dem Bezugsband nach DIN 45513, Teil 6/1976 sind in der nachfolgenden Tabelle angegeben. Die Verbesserung der Höhendynamik ($\Delta$ HD) ergibt sich als Summe von $\Delta U_{10 \text{ k, max}}$ und $\Delta$ RG.

Die Einarbeitung der Pigmente in Magnetbänder zur Feststellung der magnetischen Aufzeichnungs- bzw. Wiedergabeeigenschaften erfolgt in Anlehnung an die britische Patentschrift 1 080 614 durch 3 1/2-stündige Mahlung von 22,4 Gewichtsteilen des magnetischen Oxids mit 8,0 Gewichtsteilen PVC/PVA-Mischpolymerisat, 1,3 Teilen Ölsäure, 0,88 Teilen komplexen organischen Phosphorsäureestern und 67 Teilen Butyl-/Äthylacetat im Verhältnis 1:1 in einer Perlmühle.

Anschließend wird der Lack auf einer ca. 23 $\mu$m dicken Polyesterfolie vergossen. Die magnetische Schicht hat eine Stärke von ca. 12 $\mu$m und enthält ca. 15 g/m² Magnetpigment.

Beispiel 1

Eine wäßrige Lösung mit 1800 g $FeSO_4$ und 28,8 g $ZnSO_4$ in 18 l wird mit 2 l einer wäßrigen Lösung mit 584 g NaOH und 14,1 g $NaH_2PO_4 \cdot 2 \, H_2O$ versetzt und unter intensivem Rühren mit 80—100 l/h Luft bei 55°C oxidiert. Der analytisch ermittelte Ausfällungsgrad ergibt sich zu ca. 63%. Die röntgenografisch ermittelte mittlere Kristallitgröße ist 17,5 nm. Die Suspension wird unter Rühren und weiterem Lufteinleiten mit einer Lösung von 12,7 g $Na_4P_2O_7$ in 400 ml destilliertem Wasser in 30 Minuten versetzt und 30 Minuten nachgerührt. Nach Sulfatfrei-Waschen und Trocknen bei 120°C wird das Produkt bei 300°C entwässert und 30 Minuten bei 780°C getempert, anschließend bei 460—480°C in 60 Minuten zu $Fe_3O_4$ mit feuchtem Wasserstoff reduziert, mit $N_2$ gespült und unter $CO_2$ 30 Minuten bei 750°C getempert. Der Sauerstoffpartialdruck über $CO_2$ ist bei 1000 K (entspricht 727°C) mit $9{,}7 \cdot 10^{-8}$ atm niedrig genug, daß eine Oxydation mit Sicherheit verhindert wird. Die am Pulver ermittelten

$$\text{Magnetwerte sind: } Br/\sigma = 4.09 \times 10^{-8}.V.s. \ m/g$$

$$I^N C = 3.45 \times 10^4 \ \frac{A}{m}$$

bei einer mittleren Kristallitgröße von 32 nm (röntgenografisch bestimmt).

Beispiel 2a

325 l einer $FeSO_4$-Lösung mit 32,7 kg $FeSO_4$ und 0,925 kg $ZnSO_4 \cdot 7 \, H_2O$ werden bei 55°C mit einer Lösung von 0,256 kg $NaH_2PO_4 \cdot 2 \, H_2O$ in ca. 2 l $H_2O$ und 30 l Natronlauge mit 10,5 kg NaOH versetzt. Unter intensivem Rühren wird mit 1,4 m³ Luft/h und 4,5 m³ $N_2$/h begast, oxidiert bis die Suspension eine gelb-braune Färbung angenommen hat.

Ein Teil der Suspension, enthaltend 1130 g FeOOH wird mit einer Lösung von 21,2 g $Na_4P_2O_7$ in 0,8 l $H_2O$ bei 80°C innerhalb von 30 Minuten unter Rühren versetzt und 30 Minuten nachgerührt. Es wird Sulfat-frei gewaschen und getrocknet.

Das behandelte $\alpha$-FeOOH wird 30 Minuten bei 750°C getempert, bei 460—480°C mit feuchtem Wasserstoff reduziert und unter $N_2$ abgekühlt.

Magnetwerte: $Br/\sigma = 3.52 \times 10^{-8}.V.s. m/g$

$$^H_I C = 2.89 \times 10^4 \frac{A}{m}$$

Kristallitgröße: 23 nm

### Beispiel 2b

Das magnetische Oxid aus Beispiel 2a wird 30 Minuten bei 700°C unter $CO_2/N_2$ getempert.

Magnetwert: $Br/\sigma = 4.05 \times 10^{-8}.V.s. m/g$

$$^H_I C = 3.33 \times 10^4 \frac{A}{m}$$

Kristallitgröße: 32 nm

### Beispiel 3

Mit dem Magnetit aus Beispiel 2b wird ein Doppelschichtband hergestellt.

Für die Unterschicht wird auf eine 12 $\mu$m dicke Folie aus Polyaethylenterephthalat ein Lack aus einem $\delta$-$Fe_2O_3$-Pigment, wie es üblicherweise in hochaussteuerbaren Magnetogrammträgern verwendet wird, der folgenden Zusammensetzung:

| Zusammensetzung | Gewichts-Teile |
|---|---|
| magnetisches Pigment | |
| Koerzitivkraft am Pulver $2{,}51 \times 10^4 \frac{A}{m}$ | 6,80 |
| Polyätherurethan | 0,74 |
| Reaktionsprodukt aus Polytetramethylenglykol, Butandiol-1,4 und Diphenylmethandiisocyanat | |
| OH-gruppenhaltiges Mischpolymerisat aus Vinylchlorid/Vinylacetat | 0,80 |
| organischer Phosphorsäureester | 0,11 |
| Tetrahydrofuran | 8,5 |
| Dichloräthan-1,2 | 4,5 |
| Hexakismethoximelamin | 0,07 |
| Dodecylbenzolsulfonsäure | 0,10 |

in einer Trockenschichtdicke von 4 $\mu$m aufgetragen. Nach Trocknung und Kalanderung wurde ein wie oben hergestellter Lack mit dem Magnetit aus Beispiel 2b mit einer Trockenschichtdicke von 2 $\mu$m aufgetragen.

Gegenüber dem Bezugsband gemäß DIN 45513, Teil 6/1976 wurden folgende Meßwerte erzielt:

$$\Delta RG = +3 \text{ dB}$$

$$\Delta U_{10 \text{ k. max}} = 3 \text{ dB}$$

Die Dynamik bei 333 Hz ist mit +54 dB gegenüber dem hochaussteuerbaren Bezugsband um +2 dB zusätzlich verbessert.

Tabelle

| Beispiel | $I^HC \cdot \dfrac{A}{m} - 10^4$ | | $\Delta U_{10\,k,\,max}$ dB | $\Delta$ RG dB | $\Delta$ HD dB |
|---|---|---|---|---|---|
| | Pulver | Band | | | |
| 1 | 3,45 | 3,42 | +6 | +2,5 | +8,5 |
| 2a | 2,89 | 2,96 | +3,5 | +4,0 | +7,5 |
| 2b | 3,38 | 3,21 | +4,5 | +3,0 | +7,5 |
| A | 2,86 | 2,44 | +1,0 | −1,0 | ±0 |
| B | 3,58 | 3,06 | +1,5 | 0 | +1,5 |
| T 308 S | — | 2,50 | ±0 | ±0 | ±0 |

In Vergleichsbeispiel A ist ein handelsübliches Eisenoxid eingesetzt mit 0,35 Gew.-% Zink und ca. 0,90 Gew.-% $P_2O_5$, wie es in der DT—PS 2 347 486 beschrieben wird und unter der Bezeichnung AC 5064 der Firma AG im Handel erhältlich ist.

In Vergleichsbeispiel B ist ein hochkoerzitives ebenfalls handelsübliches Eisenoxid eingesetzt mit etwa 0,6 Gew.-% $P_2O_5$, wie es in der DT—PS 2 122 312 beschrieben wird und unhältlich ist. Die Verbesserung gegenüber diesen hochwertigen magnetischen Oxiden ist klar ersichtlich.

**Patentansprüche**

1. Thermisch stabilisierte ferrimagnetische Eisenoxide mit Koerzitivfeldstärken von

$$2,78\text{—}3,98 \times 10^4 \; \frac{A}{m},$$

die nach Einarbeitung in ein Magnetband ein gegenüber dem Bezugsband gemäß DIN 45513, Teil 6/1976 um mindestens 6 dB verbesertes Verhältnis der Aussteuerbarkeit bei einer Frequenz von 10 kHz zum Ruherauschen nach DIN 45405 aufweisen, erhältlich durch Entwässern, Tempern und Reduktion von bei einem pH-Wert unter 7 durch Fällung aus Eisen(II)-salzlösungen und Oxydation gewonnenem nadelförmigen $\alpha$-FeOOH zu Eisenoxidd, wobei bei Erreichen eines pH-Wertes von kleiner als 4 die Oxydation abgebrochen wird, dadurch gekennzeichnet, daß das $\alpha$-FeOOH eine Kristallitgröße von 12—22 nm vor der Entwässerung aufweist und durch chemische Stabilisierung gegen Versinterung geschützt wird, und daß es einen Gehalt von 0,1—5 Gew.-% an Cd, Pb, Ca, Mg, Zn, Al, Cr, W, P (gerechnet als $P_2O_5$) und/oder B (berechnet als $B_2O_3$), bezogen auf $Fe_3O_4$, aufweist.

2. Ferrimagnetische Eisenoxide nach Anspruch 1, gekennzeichnet durch einen Gehalt von 0,3 bis 3 Gew.-% Zink und 0,3 bis 3 Gew.-% P gerechnet als $P_2O_5$, jeweils bezogen auf $Fe_3O_4$.

3. Ferrimagnetische Eisenoxide nach einem der Ansprüche 1 bis 2, gekennzeichnet durch eine röntgenographisch bestimmte mittlere Kristallitgröße zwischen 20 und 35 nm.

4. Verfahren zur Herstellung der Eisenoxide nach einem der Ansprüche 1 bis 3 durch Entwässern, Tempern und Reduktion von bei einem pH-Wert unter 7 durch Fällung aus Eisen(II)-salzlösungen und Oxydation gewonnenem nadelförmigem $\alpha$-FeOOH zu Eisenoxid, dadurch gekennzeichnet, daß bei Erreichen eines pH-Wertes von kleiner als 4 und bei einer Kristallitgröße des $\alpha$-FeOOH von 12—22 nm die Oxydation abgebrochen wird und das $\alpha$-FeOOH vor der Entwässerung durch chemische Stabilisierung gegen Versinterung geschützt wird, wobei die Stabilisierung durch gleichzeitige Fällung von 0,1 bis 5 Gew.-% Cd, Pb, Ca, Mg, Zn, Al, Cr, W, P (gerechnet als $P_2O_5$) und/oder B (gerechnet als $B_2O_5$), bezogen auf $Fe_3O_4$ erfolgt.

5. Verfahren nach Anspruch 4, daß die Stabilisierung durch Auffällung der Stabilisierungssubstanzen auf das gebildete FeOOH noch in der Fällungssuspension erfolgt.

6. Verfahren nach einem der Ansprüche 4 bis 5, dadurch gekennzeichnet, daß zur Stabilisierung Zink- und/oder Phosphorverbindungen in Form wasserlöslicher Verbindungen der Fällungssuspension zugegeben werden.

7. Verfahren nach einem der Ansprüche 4 bis 6, dadurch gekennzeichnet, daß das zur Überführung in Eisenoxid verwendete $\alpha$-FeOOH röntgenographisch ermittelte mittlere Kristallitgrößen zwischen 12 und 22 nm aufweist.

8. Verfahren nach einem der Ansprüche 4 bis 7, dadurch gekennzeichnet, daß das erhaltene Eisenoxid einer weiteren Temperung unter $CO_2$ und/oder $N_2$ bei 600 bis 800°C während eines Zeitraumes von 0,2 bis 5 Stunden unterworfen wird.

## Revendications

1. Oxydes de fer ferrimagnétiques stabilisés thermiquement, ayant des forces de champ coercitif de

$$2,78\text{—}3,98 \times 10^4 \ \frac{A}{m},$$

qui, après incorporation dans une bande magnétique, présentent un rapport de la capacité de modulation à une fréquence de 10 kHz envers le bruit au repos selon la norme DIN 45405 amélioré d'au moins 6 dB par comparaison à la bande de référence selon la norme DIN 45513, partie 6/1976, qui sont obtenables par déshydratation, trempe et réduction d'un $\alpha$-FeOOH aciculaire, obtenu à une veleur de pH inférieure à 7 par précipitation de solutions de sels de fer(II) et oxydation, en oxyde de fer, en interrompant l'oxydation lorsqu'une valeur de pH inférieure à 4 est atteinte, caractérisés en ce que l' $\alpha$-FeOOH présente une dimension de cristallite de 12—22 nm avant la déshydratation et est protégé du frittage par stabilisation chimique, et en ce qu'il présente une teneur de 0,1—5% en poids de Cd, Pb, Ca, Mg, Zn, Al, Cr, W, P (calculé en $P_2O_5$) et/ou B (calculé en $B_2O_3$) par rapport au $Fe_3O_4$.

2. Oxydes de fer ferrimagnétiques selon la revendication 1, caractérisés par une teneur de 0,3 à 3% en poids de zinc et de 0,3 à 3% en poids de P calculé en $P_2O_5$, chaque fois par rapport an $Fe_3O_4$.

3. Oxydes de fer ferrimagnétiques selon l'une quelconque des revendications 1 et 2, caractérisés par une dimension moyenne de cristallite entre 20 et 35 nm, déterminée aux rayons X.

4. Procédé de fabrication des oxydes de fer selon l'une quelconque des revendications 1 à 3 par déshydratation, trempe et réduction d' $\alpha$-FeOOH aciculaire, obtenu à une valeur de pH inférieure à 7 par précipitation à partir de solutions de sels de fer(II) et oxydation, en oxyde de fer, caractérisé en ce que l'oxydation est interrompue quand on atteint une valeur de pH inférieure à 4 et à une dimension de cristallite de l' $\alpha$-FeOOH de 12—22 nm, et protège l' $\alpha$-FeOOH avant la déshydratation par une stabilisation chimique contre le frittage, la stabilisation se faisant par précipitation simultanée de 0,1 à 5% en poids de Cd, Pb, Ca, Mg, Zn, Al, Cr, W, P (calculé en $P_2O_5$) et/ou B (calculé en $B_2O_3$) par rapport au $Fe_3O_4$.

5. Procédé selon la revendication 4, caractérisé en ce que la stabilisation se fait par précipitation des substances stabilisantes sur le FeOOH formé se trouvant encore dans la suspension de précipitation.

6. Procédé selon l'une quelconque des revendications 4 et 5, caractérisé en ce que pour la stabilisation on ajoute à la suspension de précipitation des composés de zinc et/ou de phosphore sous forme de composés solubles dans l'eau.

7. Procédé selon l'une quelconque des revendications 4 à 6, caractérisé en ce que l' $\alpha$-FeOOH utilisé pour la conversions en oxyde de fer présente des dimensions moyennes de cristallite, déterminées aux rayons X, comprises entre 12 et 22 nm.

8. Procédé selon l'une quelconque des revendications 4 à 7, caractérisé en ce que l'oxyde de fer obtenu est soumis à une trempe supplémentaire sous du $CO_2$ et/ou $N_2$ à 600—800°C pendant un laps de temps de 0,2 à 5 heures.

## Claims

1. Thermally stabilized ferrimagnetic iron oxides with coercive field strengths of

$$2.78\text{—}3.98 \times 10^4 \ \frac{A}{m},$$

which, upon incorporation into a magnetic tape show an improvement of at least 6 dB in the ratio of the recording level at a frequency of 10 K c/s to background noise according to DIN 45405 in relation to the reference tape according to DIN 45513, section 6/1976, obtainable by dehydrating, tempering and reducing needle-shaped $\alpha$-FeOOH, which has been obtained, at a pH value of below 7, by precipitation from iron (II) salt solutions and oxidation, to iron oxide, the oxidation being terminated on reaching a pH value below 4, characterised in that the $\alpha$-FeOOH has a crystallite size of from 12—22 mm before dehydration and is protected against sintering by chemical stabilization, and in that it contains 0.1—5% by weight of Cd, Pb, Ca, Mg, Zn, Al, Cr, W, P (expressed as $P_2O_5$) and/or B (expressed as $B_2O_3$), based on $Fe_3O_4$.

2. Ferrimagnetic iron oxides according to claim 1, characterised in that they contain 0.3 to 3% by weight of zinc and 0.3 to 3% by weight of P expressed as $P_2O_5$, based in each case on $Fe_3O_4$.

3. Ferrimagnetic iron oxides according to one of claims 1 to 2, characterised by a mean crystallite size, determined by X-ray diffraction, of between 20 and 35 nm.

4. Process for the production of the iron oxides according to one of claims 1 to 3 by dehydration,

7

tempering and reduction of needle-shaped $\alpha$-FeOOH, obtained at a pH value below 7 by precipitation from iron (II) salt solutions and oxidation, to iron oxide, characterised in that on reaching a pH value below 4 and at a crystallite size of the $\alpha$-FeOOH of 12—22 nm the oxidation is terminated and the $\alpha$-FeOOH is protected against sintering, before dehydration, by chemical stabilization, the stabilization being carried out by simultaneous precipitation of 0.1 to 5% by weight of Cd, Pb, Ca, Mg, Zn, Al, Cr, W, P (expressed as $P_2O_4$) and/or B (expressed as $B_2O_5$), based on $Fe_3O_4$.

5. Process according to claim 4, characterised in that the stabilization is carried out by precipitating the stabilization substances on to the FeOOH formed while it is still in the precipitation suspension.

6. Process according to one of claims 4 to 5, characterised in that the stabilization is effected by adding water-soluble compounds of zinc or phosphorus to the precipitation suspension.

7. Process according to one of claims 4 to 6, characterised in that the $\alpha$-FeOOH used for the conversion into iron oxide has mean crystallite values, determined by X-ray diffraction of from 12 to 22 nm.

8. Process according to one of claims 4 to 7, characterised in that the iron oxide obtained is subjected to further tempering under $CO_2$ and/or $N_2$ at 600 to 800°C over a period of 0.2 to 5 hours.